# EUROPEAN PATENT APPLICATION

(11) **EP 4 397 454 A1**
(43) Date of publication of application: **10.07.2024**
(21) Application number: 23275002.6
(22) Date of filing: 06.01.2023
(51) Int. Cl.: B25J 9/16, B25J 11/00, B23B 35/00

(54) **A TOOL ENGAGEMENT COUPLING SYSTEM AND ASSOCIATED METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is provided a tool engagement coupling system configured to engage a tool engagement coupler with a locator located relative to a workpiece at a working position of a tool, the system comprising: a robotic arm linked to the tool engagement coupler and moveable in multiple axes relative to the workpiece to position the tool engagement coupler at the working position via the locator; wherein the robotic arm operates in one or more impedance modes the or each of which is configured to give rise to a different stiffness in one or more of the axes of motion of the tool engagement coupler.

## Description

### FIELD

The present invention relates to a tool engagement coupling system and associated method, particularly configured to position a tool in a predetermined work position on a workpiece.

### BACKGROUND

Vehicle manufacture traditionally requires skilled operators to work within un-ergonomic restricted access areas for long periods of time to complete drilling tasks, using an array of different tooling and shop aids. Under conventional methods there are a large range of hard to quantify process variables such as the skill and concentration level of the operator, placement accuracy of drill tooling (block and bush, drill jigs etc.), as well as the serviceability of the hand tooling (pneumatic drills, drill bits, torque wrenches, etc.) and drill tooling. All of these factors contribute to the increased likelihood of manufacturing NCR's (Non-Conformance Report)/quality defects, variance in process completion time and cost of air vehicle manufacture.

Various solutions have been proposed but these have failed to address the problem, meaning the requirement still exists to automate at least some of the actions currently provided by operators. In addition, a need exists for accurate processes which ensures tooling is guided into a precise location in order to carry out any operation.

### SUMMARY

According to an aspect of the invention there is provided a tool engagement coupling system configured to engage a tool engagement coupler with a locator located relative to a workpiece at a working position of a tool, the system comprising: a robotic arm linked to the tool engagement coupler and moveable in multiple axes relative to the workpiece to position the tool engagement coupler at the working position via the locator; wherein the robotic arm operates in one or more impedance modes the or each of which is configured to give rise to a different stiffness in one or more of the axes of motion of the tool engagement coupler.

Preferably, there is provided a tool engagement coupling system, wherein the impedance mode may be selected based upon at least one of the tasks the system is required to undertake and the distance tool engagement coupler is from the work position.

Preferably, there is provided a tool engagement coupling system, wherein the distance comprises a plurality of distance ranges in each of which the robotic arm operates in a predetermined impedance mode.

Preferably, there is provided a tool engagement coupling system, wherein a first impedance mode of the or each predetermined impedance modes comprises a stiff mode in which the robotic arm is moveable in one or more axes of motion.

Preferably, there is provided a tool engagement coupling system, wherein in the stiff mode the robotic arm is moveable in one axis of motion.

Preferably, there is provided a tool engagement coupling system, wherein a second impedance mode of the or each predetermined impedance modes comprises a compliant mode in which the robotic arm is moveable in multiple axes of motion.

Preferably, there is provided a tool engagement coupling system, wherein in the compliant mode the robotic arm is moveable in X and Y axes and in yaw, pitch and roll.

Preferably, there is provided a tool engagement coupling system, wherein the system operates in successive predetermined impedance modes.

Preferably, the impedance mode is determined from the impedance on the tool engagement coupler from an effective weight experienced at the tool engagement coupler.

Preferably, there is provided a tool engagement coupling system, wherein the effective weight is based on movement of the arm and a weight exerted on the tool engagement coupler by the robotic arm and an associated load supported by the robotic arm.

Preferably, there is provided a tool engagement coupling system, wherein associated load comprises one or more of a connector between the system and the tool engagement coupler, the tool and the joints of the arm.

Preferably, there is provided a tool engagement coupling system, wherein the tool engagement coupling system includes a tool engagement coupler.

Preferably, there is provided a tool engagement coupling system, wherein the tool engagement coupler includes an engagement member having a first predetermined shape adapted to engage with the locator having a second predetermined shape.

Preferably, there is provided a tool engagement coupling system, wherein the tool engagement coupler is adapted to be moved by the robotic arm based on a decreasing level of spatial tolerance as the tool engagement coupler approaches the locator based at least in part on the first predetermined shape and the second predetermined shape.

Preferably, there is provided a tool engagement coupling system, further comprising a sensor for determining impedance on the tool engagement coupler to enable one or more of the impedance modes.

Preferably, there is provided a tool engagement coupler for use in the tool engagement coupling.

Preferably, there is provided a locator for use in the tool engagement coupling system.

According to an aspect of the invention there is provided a method of engaging a tool engagement coupler with a locator located relative to a workpiece at a working position of the tool, the method comprising: moving, a robotic arm linked to the tool engagement coupler, in multiple axes relative to the workpiece to position the tool engagement coupler at the working position via the locator; operating the robotic arm in one or more impedance modes each of which is configured to give rise to a different stiffness in one or more of the axes of motion of the tool engagement coupler.

Preferably, there is provided a method further comprising selecting the impedance mode based upon at least one of the tasks a system is required to undertake and the distance the tool engagement coupler is from the work position.

Preferably, there is provided a method wherein an algorithm is used to record the current position and improve the accuracy of indexing between locators and/or subsequent holes in a jig.

Preferably, there is provided a method wherein a first impedance mode of the or each predetermined impedance modes comprises a stiff mode in which the robotic arm is moveable in one or more axes of motion.

Preferably, there is provided a method wherein in the stiff mode the robotic arm is moveable in one axis of motion.

Preferably, there is provided a method wherein a second impedance mode of the or each predetermined impedance modes comprise a compliant mode in which the robotic arm is moveable in multiple axes of motion.

Preferably, there is provided a method wherein in the compliant mode the robotic arm is moveable in X and Y axes and in yaw, pitch and roll.

Preferably, there is provided a method wherein the system operates in successive predetermined impedance modes.

### BRIEF DESCRIPTION OF THE FIGURES

Embodiments of the invention will now be described by way of example only with reference to the figures, in which:
Figure 1 shows a block diagram of multifunction mobile platform in accordance with an aspect of the present invention;
Figure 2 shows a simplified diagram of a tool engagement coupler, a locator, and a locator jig for use with the platform of figure 1;
Figure 3 shows a schematic diagram demonstrating engagement between the tool engagement coupler and the locator; and
Figure 4 is a flow chart relating to the operation of the tool engagement coupling.

### DETAILED DESCRIPTION

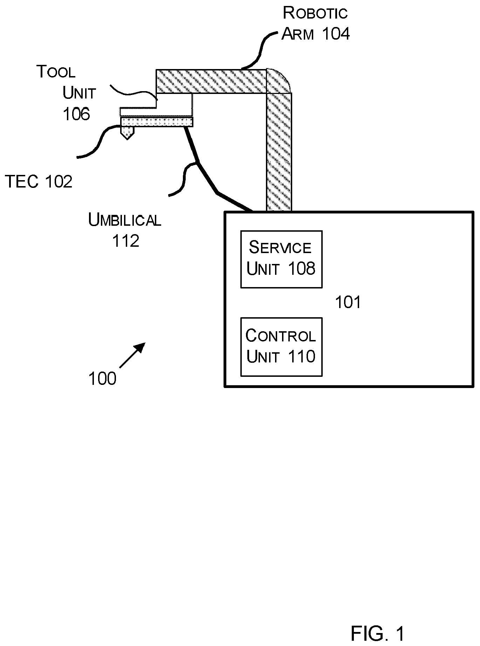

A system 100 includes a Mobile Platform (MP) 101 displayed in Figure 1, is a technology that has been developed to undertake a range of manufacturing tasks in either a completely autonomous fashion, or collaboratively with operators. One use case for the invention is the development of a tool engagement coupler (TEC) for use in restricted or unrestricted access drilling or other tooling.

Air-vehicle manufacture traditionally requires skilled operators to work within un-ergonomic restricted access areas for long periods of time to complete tasks. Under conventional methods there are also a large range of hard to quantify process variables such as placement accuracy of tooling. This often results in defects, variance in process completion time and cost of air vehicle manufacture. Employing an autonomous apparatus, such as the system, to perform manufacturing tasks poses numerous challenges.

Firstly, the positioning of the apparatus to perform a task needs to be precise such that actions (e.g., drilling) taking place on components are performed in a required working position (WP). This is especially important for the manufacture of sophisticated structures that require precision engineering such as components for aeronautical applications. Embodiments described herein achieve this precision by providing a tool engagement coupler, connected to a mobile platform (MP), and a locator, positioned proximate to the working position, which engage with one another to guide a tool into the working position.

It is unlikely the automated positioning of the apparatus in the working position to perform tasks is going to be perfect on every occurrence. Therefore, it is desirable for the positioning of the apparatus to be provided with a spatial tolerance when approaching a working position (e.g., ±5mm). The embodiments described below achieve this spatial tolerance by configuring the tool engagement coupler and the locator to guide the tool into the correct engagement position.

A system 100 includes a moving platform (MP) 101, a service unit 108 and a control unit 110. The MP 101 enables the system 100 to move automatically to a working site location. The MP 101 is connected to a robotic arm 104. The robotic arm 104 is connected to a tool unit (TU) 106 which is connected to a tool engagement coupler 102.

The tool engagement coupler 102 is connected to a robotic arm 104. The robotic arm 104 is responsible for positioning the tool engagement coupler 102 in the vicinity of the locator and applying the force required for the tool engagement coupler 102 to engage with the locator. The robot arm 104 houses components configured to operate the mechanisms housed within the tool engagement coupler 102 which enable the tool engagement coupler to engage with the locator. In another embodiment, the components configured to operate the mechanisms housed within the tool engagement coupler 102 are separate to the robotic arm 104. For example, a robot umbilical connected to the system 100 and the tool engagement coupler 102 houses the components configured to operate the tool engagement coupler 102. The robotic arm 104 is connected to the system 100 which comprises a service unit 108 and a control unit 110. The control unit 110 is pre-programmed to control the positioning and movement of the robotic arm. The components configured to operate the mechanisms housed within the tool engagement coupler 102 are separate to the robotic arm 104. A robot umbilical 112 connected to the system 100 and the tool engagement coupler 102 houses the components configured to operate the TEC tool engagement coupler such as cabling, compressed air etc...

The tool engagement coupler or coupling (TEC) 102 is configured to guide a tool to a work position. This is achieved by guiding and engaging the tool engagement coupler towards a locator positioned at a predetermined position relative to a workpiece. The guidance and engaging of the tool engagement coupler 102 and the locator provide precise positioning of the tool on the workpiece when the tool engagement coupler 102 and the locator are engaged. The guidance towards and the engaging of the tool engagement coupler 102 and the locator operates within a predetermined spatial tolerance (e.g., ±5mm displacement of the tool from the work position) for the initial positioning of the tool engagement coupler 102 prior to final engagement with the locator.

As previously described a control unit 110 controls the operation and movement of the robotic arm 104 to ensure the tool engagement coupling is accurately located relative to the locator workpiece at the work position. As described above the locator is at a known predetermined position in respect of the Cartesian axes and in terms of the rotational axes (Roll, Pitch and Yaw, referred to as A, B, C). The positioning not only needs to be accurate but also to be smooth and consistent. If the movement is jerky and/or ill-defined there could be a problem with the coupling and worse damage to the workpiece, engaging mechanism and/or the tool being used.

The robotic arm 104 is connected to the system 100 and comprises a plurality of joints along the length of the arm. The joints enable sections of the robotic arm 104 to change the rotation, pitch and yaw relative to one another which allows 6 degrees of freedom (6DOF) movement of the tool engagement coupler 102. The plurality of joints enable the robotic arm 104 to flexibly adopt different shapes, as a result the shape of the robotic arm 104 can be adapted to fit to the environment local to the work position. The joints comprise torque sensors which provide feedback of the forces subject to the robotic arm 104 to the control unit 110.

The TU 106 comprises the tool and the means to drive the tool. The TU 106 comprises an advanced drilling unit (ADU) and the TU 106 is connected to the robotic arm via a tool changer configured to connect to different types of TUs. The TU 106 inserts the tool into the tool engagement coupler 102. The service unit 108 is configured to supply components of the system 100 with substances required for the components to function such as lubricants and compressed air.

The present invention seeks to address some of the issues associated with guaranteeing a smooth delivery of the tool engagement coupling to engage with the locator without misalignment and potential collisions.

The system 100 includes hardware and software functions for automation of tasks. Through the programming and process the system can be moved to the required location for the task in hand. The system includes a motor (not shown) in the main body which enables the system to move around a factory location or within a vehicle. The system autonomously moves to the location of the workpiece on which tooling is required. Having arrived at the location within the factory the system stops moving and the robotic arm 104 is deployed to be moved towards the locator.

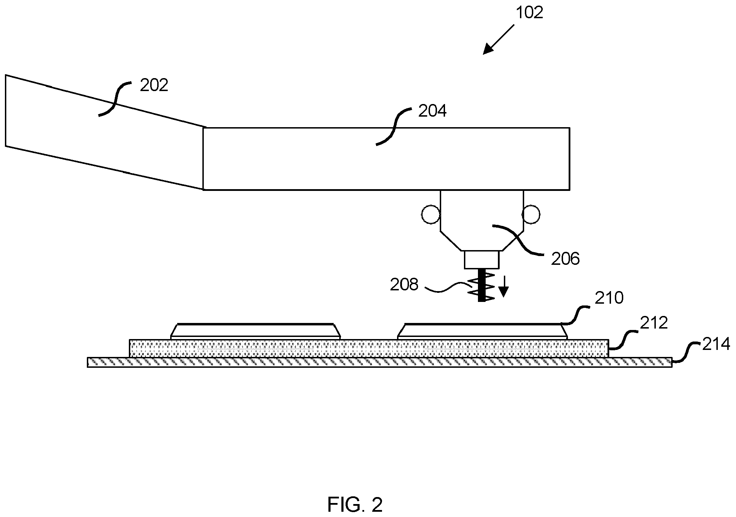

Figure 2 shows a two-dimensional representation of the tool engagement coupler 102. As described previously, the tool engagement coupler 102 is connected to the robotic arm 104 via the TU 106. The tool engagement coupler 102 comprises a first part 202, a second part (also referred to as the drive portion herein) 204 and an engagement member 206. A tool 208, provided by the TU 106, is housed by the engagement member 206. A locator 210 of a plurality of locators housed by a locator jig 212 is positioned below the engagement member 206. The locator jig 212 is affixed to a workpiece 214.

The first part 202 is positioned at the proximal end of the tool engagement coupler 102 and forms the connection with the robotic arm 104 via the TU 106. The first part 202 comprises motors configured to power components in the second part 204. The motors may comprise a stepper motor that may be accompanied by a controller where the controller provides positioning feedback to the stepper motor. The controller receives information from proximity sensors located in the engagement member 206. The motors are controlled by the control unit 110. The motors are operated via controls passed through the robot umbilical 112. The connection between the motor portion 202 and the drive portion 204 may comprise a drive shaft or drive coupling.

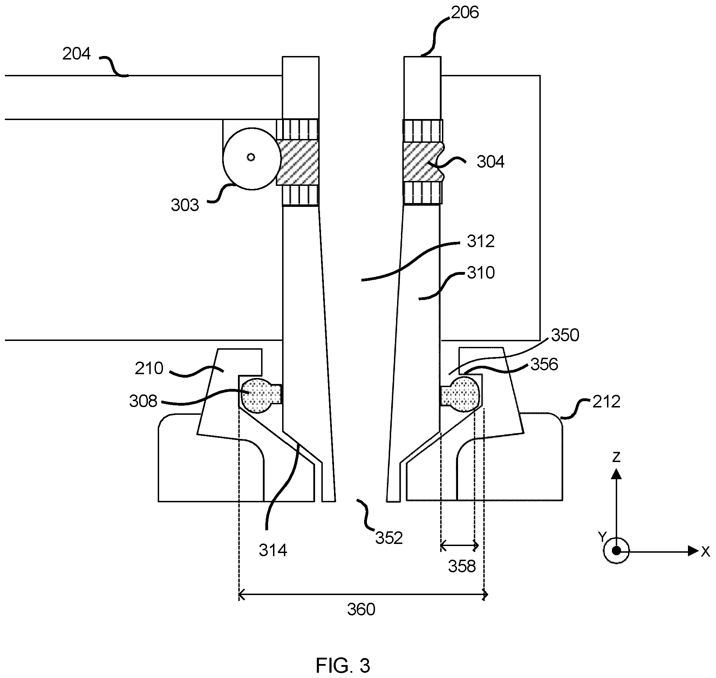

The second part 204 of the tool engagement coupler 102 comprises the components configured to drive an engagement mechanism in the engagement member 206. The engagement mechanism is described in more detail in Figure 3. The drive portion 204 comprises one or more of a series of gears (e.g. mitre gears), drive belts and drive belt tensioners connected to the drive shaft or drive coupling in some cases. A worm drive is used to drive the engagement mechanism in the engagement member 206 in some embodiments.

The engagement member 206 of the tool engagement coupler 102 is configured to engage with a locator at the work position. The engagement member 206 is also configured to house a tool 208. The engagement member 206 has a predetermined shape adapted to engage with the locator 210 having a second predetermined shape. The first and second predetermined shapes will be described in more detail in reference to Figure 3, although it is not shown in Figure 2, the engagement member 206 is cylindrical in shape in some cases and includes an opening through the centre through which the tool 208 is able to pass as indicated by the arrow in Figure 2.

Figure 3 shows a schematic two-dimensional side profile view of the engagement member 206 in an engaged state with a locator 210. The locator 210 is fixed to a locator jig 212. The locator 210 is a bush in some cases. The locator 210is fixed to the locator jig 212 in any appropriate manner, including mechanical fixing, adhesive, magnetic fixing etc. The locator 210 comprises a tool opening 350 and a working site opening 352 on an opposite side closest to the working site. Although it is not shown in Figure 3, the tool opening 350 may be circular. To ensure the TEC 102 can be positioned precisely enough for the locator 210 to receive the engagement member 206, the diameter of the tool opening 350 may be determined by the spatial precision of the robotic arm 104. For example, the diameter may be equal to or greater than the spatial precision of the robotic arm. The locator 210 further comprises a lip (also referred to as a lipped portion herein) 356 extending into the tool opening 350 at the tool opening 350 side of the locator 210.

The engagement member 206 and locator 210 work in combination to allow the robotic arm 104 within the predetermined spatial tolerance when positioning the tool engagement coupler 102 at the work position. Figure 3 shows the engagement member body 310 having a first predetermined shape comprising a tapered end 314 forming a conical shape in three-dimensions. The locator 210 is shown having a second predetermined shape comprising a sloped 'bowl-like' internal structure. As a result, when the tapered end 314 of the engagement member 206 contacts the sloped internal structure of the locator 210 and is moved towards the locator 210, the central opening 312 is moved to the centre of the locator 210 at the work position. Therefore, the level of movement or spatial tolerance of the tool engagement coupler 102 by the robotic arm 104 decreases as the engagement member 206 approaches the locator 210 based at least in part on the first predetermined shape of the engagement member body 310 and the second predetermined shape of the locator 210. For example, when the engagement member 206 is positioned above the locator, the movement or spatial tolerance of the tool engagement coupler 102 is determined by the range of motion of the robotic arm 104. Whereas, when the engagement member is positioned with the locator, the movement or spatial tolerance of the tool engagement coupler 102 is greater towards the top compared to the bottom of the locator 210.

The robotic arm and accordingly the tool engagement coupler 102 are more compliant in the x and y axes compared to the z axis (indicated in Figure 3) which are set according to control modes in some cases. The increased compliance also extends to the pitch, roll and yaw of the robotic arm in some cases. The tool engagement coupler 102 is able to be moved by the robotic arm 104 in the z axis at this time. As a result, the position and configuration of the robotic arm 104 (and therefore the position of the tool engagement coupler 102) reacts to the interfacing between the engagement member 206 and locator 210 whilst the tool engagement coupler is moved in the z direction. Once the tool engagement coupler 102 is correctly positioned the robotic arm 104 moves the tool engagement coupler 102 in the z axis by a predetermined amount thereby engaging the tool engagement coupler 102 and the locator 210 in the final work position.

If there is alignment the engagement member 206 is moved towards the workpiece by the robotic arm 104 and the tapered end 314 of the engagement member 206 contacts the edges of the opening of the locator 210 thereby guiding the engagement member 206 towards the centre of the locator 210.

The engagement member 206 and locator 210 also work in combination to secure the position of the central opening 312 at the work position. The locator 210 comprises a lipped portion 356 around the edge of the tool opening which is configured to receive locking components 308 of the engagement member 206. As a result, the engagement member 206 is prevented from moving other than in the z axis into the locator 210. Furthermore, the locking components 308 also prevent the engagement member 206 moving in the x-y axis of the locator 210. The locking components 308 apply a force to the inside of the locator 210 thereby holding the engagement member 206 in place. The engagement member 206 is therefore held in a stiff position as the tool 208 is delivered to the work position via the central opening 312.

The movements that are restricted in the different modes of operation need not be as described above. Depending on the use case different axes may be stiff or compliant as will be described in greater detail below.

The extension length 358 of the locking components 308 are preconfigured to a length that is based on the width of the lipped portion 360 of the locator 210. The extension of the locking components 308 therefore contributes to the precision of the tool 208 delivery to the work position by the locking components 308 ensuring a pre-defined distance from the lip 356 of the locator 210. The locking components 308 also ensure a pre-determined vertical displacement from the working site by extending the locking components 308 into the slopped internal structure of the locator 210 causing the engagement member 206 to move in the z direction away from the work position.

The engagement of the first predetermined shape of the engagement member 206 and the second predetermined shape of the locator 210 means the precise positioning of the engagement member 206 is not entirely dependent on the control unit's 110 control of the robotic arm 104. The control unit 110 is responsible for positioning the tool engagement coupler 102 within a spatial tolerance of the work position (e.g., ±20mm) whilst the fine positioning is achieved with using the features described in relation to the engagement member 206 and the locator 210.

Reducing the responsibility of fine positioning on the control unit 110 increases the speed and efficiency of delivering a tool to a working site. Additionally, it means less accurate robot systems, such as a cobot, can be used for precise tooling with the assistance of the tool engagement coupler 102 and locator 210. Considering the robotic arm 104 can be used to move the tool engagement coupler 102 in space deprived environments, the control unit may have to process a large number of parameters relating to the configuration of the robotic arm 104 when making minor adjustments to the position of the tool engagement coupler 102 (e.g., the movement in 6 degrees of freedom of the joints of the robotic arm 104). The processing workload is reduced by the engagement member 206 and positioning a locator 210 at the work position as the fine positioning is automatically achieved due to the first and second predetermined shapes of the engagement member 206 and locator 210 respectively as described above.

Due to the configuration of the TEC 102, it is possible to be powered using only electricity. Typical clamping systems require a supply of compressed air to secure a tooling mechanism to a working site which is not a necessary requirement for the present invention. Without the need for a compressed air supply, the system 100 can be integrated into a mobile platform because of reduced weight of an electrically powered system compared to a pneumatic or hydraulic system. Thus, the system can be programmed to move to the working site automatically, whilst also being able to move to restricted spaces or hazardous environments.

The contribution of the features displayed in the figures can be explained by describing the step by step process of delivering a tool to a working site. Firstly, the control unit 110 moves the robotic arm 104 into a working area utilising the 6 degrees of freedom of the arm to avoid any access restrictions to the work position. The robotic arm 104 and the tool engagement coupler 102 are moved by the control unit towards a work position where a locator jig 212 comprising locator(s) 210 is positioned. The control unit 110 then instructs the robotic arm 104 to apply a force in the direction towards the locator, thereby moving the robotic arm in the z direction as the engagement member 206 approaches the locator 210, whilst instructing the robotic arm 104 to be compliant in one or more axes and stiff in at least one axis depending on the relative orientations of the tool engagement coupler 102 and the locator 210. As the tapered end of the engagement member 206 contacts the sloped internal structure of the locator 210, the engagement member 206 slides towards the centre of the locator 210. Following the engagement of the tapered end 314 of the engagement member 206 and the sloped internal structure of the locator 210, the movement of the TEC 102 becomes more restrained in one or more axes (e.g., the x and y axis).

Once the engagement member 206 has engaged the locator 210, the control unit 110 activates the motors in the first part 202 of the tool engagement coupler 102 which drives the components in the second part 204 of the tool engagement coupler 102. Activation of the motors is initiated in response to the torque sensors in the robotic arm 104 detecting a change of force subject to the robotic arm 104 in response to the engagement member 206 contacting the locator 210. Proximity sensors in or on the engagement member 206 facilitate the activation in some cases. This causes the mechanism in the engagement member 206 to activate causing the locking components 308 to extend radially from the engagement member 206. In the embodiment illustrated in Figure 3, the mechanism in the engagement member 206 comprises a rotating worm drive 303. The worm drive 303 contacts the worm wheel 304 and drives the rotation of the worm wheel 304. The worm wheel 304 is connected to one or more locking components 308 via a rotating cam (not shown in Figure 3) located within the engagement member body 310. As the worm wheel 304 rotates, the locking components 308 are extended radially from the engagement member body 310.

The locking components 308 extend under a lip 356 on the top edge of the locator 210 and apply a force to the inside wall of the locator 210, thus fixing the engagement member 206 in position and preventing movement of the TEC in the x, y, z, pitch, roll and yaw axes. In the fixed position, the central opening 312 of the engagement member with the working position. Sensors positioned on or within the engagement member 206 track the extension of the locking components 308 in some cases to detect when they are positioned under the lip 356. Similar sensors may also detect the rotation of a cam (connecting the worm wheel 304 to the one or more locking components 308 and located within the engagement member body 310) to indirectly detect the extension of the locking components 308. During the extension of the locking components 308, the control unit 110 instructs the robotic arm 104 to operate in one of the control modes (e.g., cartesian impedance control modes). As a result, the locking components 308 apply force to the internal structure of the locator 210 and the engagement member 206 is moved to a precise pre-determined position in the x, y and z axes and configured in pitch, yaw and roll orientations.

Air-vehicle manufacture traditionally requires skilled operators to work within un-ergonomic restricted access areas for long periods of time to complete drilling or other manufacturing tasks, using an array of different tooling and shop aids. Under conventional methods there are also a large range of hard to quantify process variables such as the skill and concentration level of the operator, placement accuracy of tool, as well as the serviceability of any other tooling required for the task. All of these factors contribute to the increased likelihood of manufacturing defects, variance in process completion time and cost of air vehicle manufacture. The present invention seeks to overcome some of the issues.

The present invention is developed to undertake a range of manufacturing tasks in either a completely autonomous fashion, or collaboratively with operators. As previously discussed, the system 100 includes a control unit 110 which controls the movement of the system 100 and a collaborative robot (not shown) which controls the movement of the robotic arm 104 (also referred to as a robotic arm). The system 100 and the robot have hardware and software functions for automation of tasks, through a unique programming and process methodology as discussed below.

The system 100 is programmed to move around a factory floor or in a vehicle to move the system to the relevant workpiece. The movement from piece to piece or place to place is via a motor which drives wheels on the bottom of the system. The system uses simultaneous localization and mapping (SLAM) using laser scanners and wheel encoders to navigate around the factory in an autonomous fashion. The paths for the system are preprogramed, but the system is capable of autonomous movements of the programmed path to navigate around an obstacle if required.

Once the system is located near to the workpiece the system stops moving and the robot is used to move the robotic arm to an engagement position with the required locator at a required working position. The movement of the arm relative to the locator and underlying workpiece should be smooth and consistent. If the movement is jerky or not accurately controlled the tool engagement coupling may collide with the workpiece causing damage. The present invention seeks to avoid this as described below.

As previously stated, the robotic arm has a plurality of joints moveable in different directions or rotations. Associated with each joint is a torque sensor which is able to measure a twisting or turning force about an axis, which can be applied in a clockwise or counter-clockwise direction. Torque is a function of force and length. In the case of a robotic arm the movement of each joint about its respective axis which contributes to an effective weight of the tool engagement coupler 102. The effect of each joint remains substantially constant and is known by the system. Movement from pose to pose causes a small change in the effective weight of the arm at the distal end of the tool engagement coupler 102. However, there are other elements associated with the arm which have a greater influence of variable effective weight. In the present situation this includes the umbilical cord which supplies compressed air and lubricants to the tool engagement coupler system and any cabling or other connections which hang or are supported by the arm. In addition if the tool is supported in the vicinity of the tool engagement coupler during movement the weight of the tool may also influence the effective weight experienced by the tool engagement coupler. The effective weight from whichever source can be determined by the torque sensors.

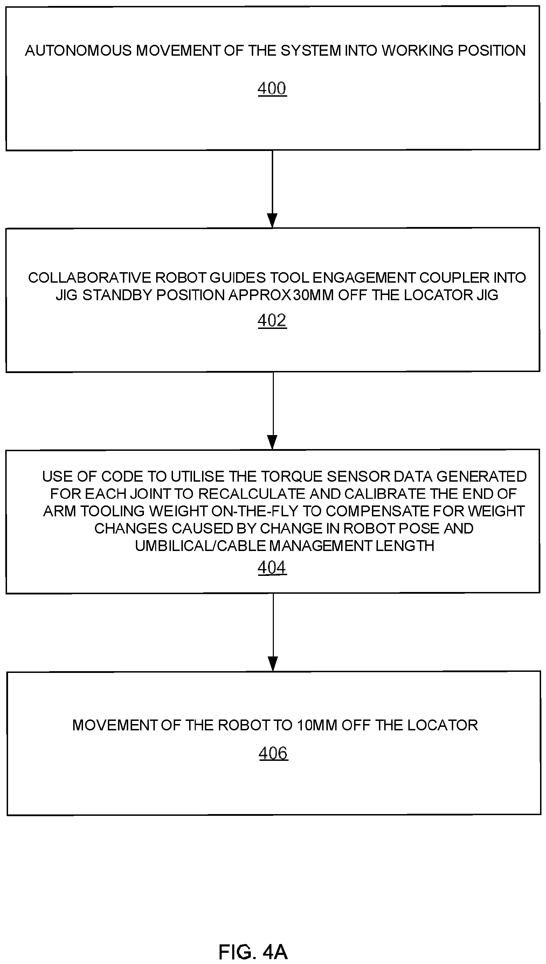

The weight of each part of the robotic arm is known but movement from pose to pose thereof causes a change in the effective weight of the arm at the distal end of the tool engagement coupler 102. In the present invention, this change in effective weight is compensated for to ensure accurate position of the tool engagement coupling at the locator. This is facilitated by a three stage guidance and calculation method as described with reference to figure 4A to 4C. It will be appreciated that there could be more or less stages depending on the process being implemented.

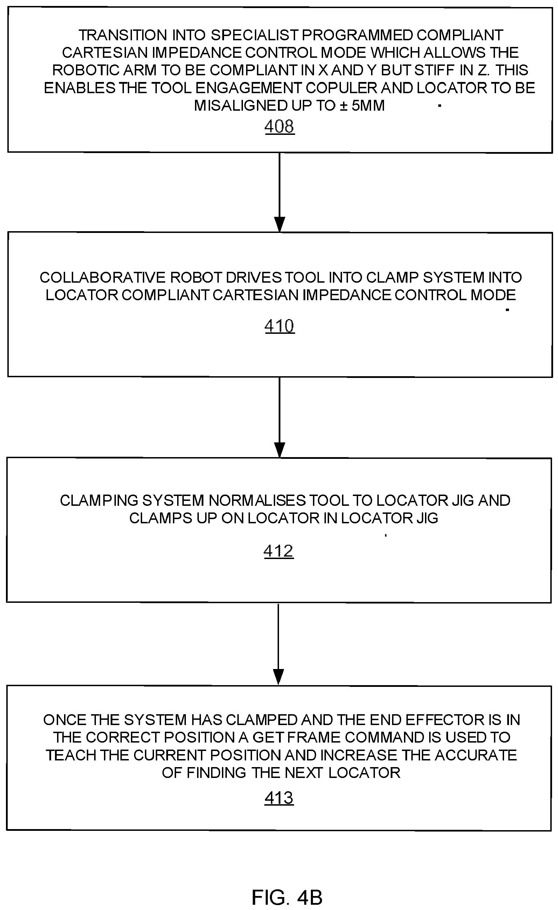

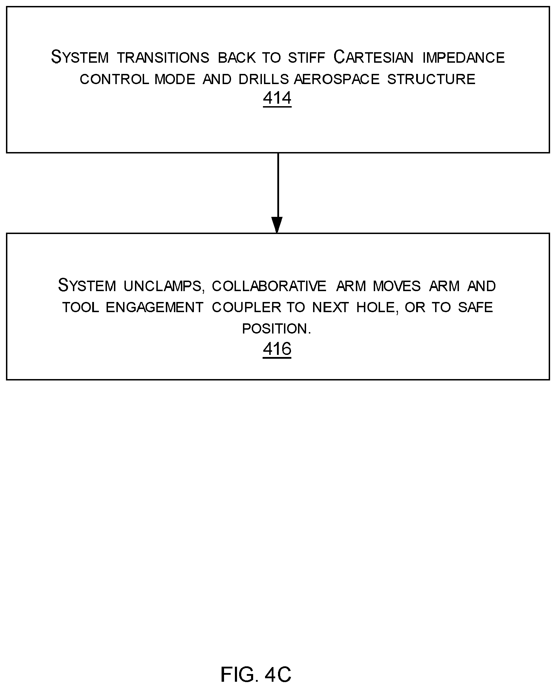

The first stage, shown in figure 4A is a stiff Cartesian impedance mode 1. The second stage, shown in figure 4B is a compliant Cartesian impedance mode 2. The third stage, shown in figure 4C is a further stiff Cartesian impedance mode 1. The Cartesian impedance control modes are associated with the task/interfacing that the robot is required to do. The different Cartesian control modes are employed depending on how the solution is required to interact with the world. In this instance the 2 different Cartesian control modes (stiff and compliant mode) are initiated at different distances and parts of the process dependent on the compliance required of the system. A stiff Cartesian impedance control mode 1 is used to approach the workpiece for accuracy purposes; the compliant Cartesian impedance control mode 2 is employed for workpiece interaction to allow compliance for accurate location and normalisation, a further stiff Cartesian impedance control mode is then employed for drilling or other tooling activities.

The different stages are implemented successively and the order in which they occur is as described or in any other appropriate order.

Impedance is a measure of how much a body resists motion and is a ratio of the force on the body and the velocity with which it moves. By varying the impedance of a body it is made stiffer or more compliant. In the present invention a plurality of impedance modes can be used to give rise to different stiffness in different axes of motion. Two such modes are mentioned above and will be described further below. In this context stiff means that the robot arm cannot be moved by external influences and moment of the robot arm and is only controlled by controlled or programmed movements in certain axes. Compliant in this context means that the robot arm can be programmed to be influenced and moved or pushed around by external influences in order to get the robot arm to a desired position or pose. In one situation, the robot arm is compliant in X, Y A,B,C and can be guided by a combination of programmed robot arm control and external influences including the tapered locator, an associated shape of the engagement member, the effective weight etc...

Referring to figure 4A the robotic arm moves autonomously into working position 400. The robot guides tool engagement coupler 102 into jig standby position to a known distance which depends on the activity from the working position or locator jig engagement point (step 402). A standby position by way of example is variable depending on the job, the 30mm position is one of many examples.

The measurements from the torque sensors on each robot joint is used in an on-the-fly re-calculation and calibration of the effective weight of the tool engagement coupler 102 and the different parts of the robotic arm which apply torque at the distal end of the tool engagement coupler 102 (step 404). This is to compensate for any change in the effective weight in the tool engagement coupler 102 and robotic arm due to movement and external influences from the cable, umbilical cord or anything supported by the arm. The calculations are made by a java script code or any other appropriate mechanism. In step 406, the tool engagement coupler 102 is moved to within about 10mm of the locator based at least in part on the compensated effective weight.

Code is used and the torque sensor data generated for each joint to enable recalculation of the end of arm tooling weight on the fly, to compensate for weight changes caused by change in robot pose and umbilical/cable management length.

The automated end effector weight calculation and calibration is now described in greater detail. Before entering a compliant mode, the algorithm uses the programmed centre of gravity of the end effector and live joint torque data to calculate and update the end effector's programmed weight. The algorithm and system undertake this action by adding and subtracting weight to the programmed weight of the end effector whilst using the torque sensors on each joint as a scale to perfectly balance the programmed end effector weight. The process then passes to the compliant mode 2 as shown in figure 4B. In step 408 the system transitions into specialist programmed compliant Cartesian impedance control mode 2 which allows the robotic arm to be compliant in X and Y but stiff in Z. This enables a tool centre point of the tool engagement coupler and the locator 210 to be misaligned up to ±5mm from the centre of the locator. In step 410 the robot (e.g. a collaborative robot) drives tool engagement coupler 102 into the locator 210 situated on the locator jig 212 in compliant Cartesian impedance control mode. In step 412 the tool engagement coupler 102 engages with the correct locator 210 where the distal end of tool engagement coupler 102 is not moveable relative to the locator, thereby clamping the tool engagement coupler 102 to the locator.

At step 413, once the system has clamped and the end effector is in the correct position a get frame command is used to teach the current position and increase the accuracy of finding the next locator.

As noted above the clamping is encouraged and facilitated by the specialist bush, also referred to as the locator, and the tapered end of the tool engagement coupler 102, which is also referred to as the distal end. As these move into engagement they seamlessly guide the distal end into the working position on the workpiece.

Once the end effector is clamped and normalised the robot then returns to a stiff Cartesian impedance control mode 1 as shown in figure 4C 414. The required tool is deployed through the central opening passing through the tool engagement coupler 102 and the locator to engage with the workpiece at the working position. Once the manufacturing process (e.g. drilling) has been completed, the tool is removed from the central opening and the tool engagement coupler 102 is ready to be decoupled from the locator. The tool engagement coupler 102 is then moved to the next locator or to a safe position (step 416).

From the above the system is configured to work in a "stiff" mode and a "complaint" mode. There could be different modes using rotational axes, combinations of rotational axes, Cartesian axes and a combination thereof. The complaint Cartesian impedance control mode enables less accurate robot systems to be used for accurate high tolerance manufacturing processes.

Each mode is based on a required allowable degree of movement of the distal end of the tool engagement coupler 102 relative to the locator in each axis. It will be appreciated that the axis or axes are configured to have the same or different allowable degrees of movement as one another.

The system works in the present case in the stiff and compliant modes. It will be understood that the number and type of modes may vary dependent on many variables. These include, but are not limited to: numbers and types of axes; size and shape of the workpiece or working position; size and shape of the system or any other component thereof; orientation of the workpiece relative to the system; nature of the tool and any other relevant situation required to enable the required tooling in the working position. The system works from any type of robot and any type of manufacturing situation.

The allowable distance in each axis is predefined for different modes and are further based on the variables of the relevant situation and the effective weight of the tool engagement coupler 102.

Accurate location of the tool engagement coupler 102 in the working position is achieved based on at least one or more of the following: the different modes, the shape of the tool engagement coupler 102 distal end and locator and the correct calibration based on the effective weight of the tool engagement coupler 102. In addition, the robot pose may add further effects.

The above describes a number of different aspects and examples of the invention. It will be appreciated that alternatives rather than the described features may fall within the scope of the claims.

## Claims

1. A tool engagement coupling system (100) configured to engage a tool engagement coupler (102) with a locator located relative to a workpiece at a working position of a tool, the system comprising:
a robotic arm (104) linked to the tool engagement coupler (102) and moveable in multiple axes relative to the workpiece to position the tool engagement coupler (102) at the working position via the locator;
wherein the robotic arm operates in one or more impedance modes the or each of which is configured to give rise to a different stiffness in one or more of the axes of motion of the tool engagement coupler (102).

2. A tool engagement coupling system (100) according to claim 1, wherein the impedance mode is selected based upon at least one of the tasks the system is required to undertake and the distance the tool engagement coupler (102) is from the work position.

3. A tool engagement coupling system (100) according to claim 2, wherein the distance comprises a plurality of distance ranges in each of which the robotic arm operates in a predetermined impedance mode.

4. A tool engagement coupling system (100) according to claim 3, wherein a first impedance mode of the or each predetermined impedance modes comprises a stiff mode in which the robotic arm is moveable in one or more axes of motion.

5. A tool engagement coupling system (100) according to claim 4, wherein in the stiff mode the robotic arm is moveable in one axis of motion.

6. A tool engagement coupling system (100) according to any one of claims 3 to 5, wherein a second impedance mode of the or each predetermined impedance modes comprises a compliant mode in which the robotic arm is moveable in multiple axes of motion.

7. A tool engagement coupling system (100) according to any one of claims 3 to 6, wherein the system operates in successive predetermined impedance modes.

8. A tool engagement coupling system (100) according to any one of the preceding claims, wherein the impedance mode is determined from the impedance on the tool engagement coupler from an effective weight experienced at the tool engagement coupler.

9. A tool engagement coupling system (100) according to any one of the preceding claims, wherein the tool engagement coupling system includes a tool engagement coupler.

10. A tool engagement coupler for use in the tool engagement coupling system (100) according to any preceding claim.

11. A locator for use in the tool engagement coupling system (100) according to any one of claims 1 to 9.

12. A method of engaging a tool engagement coupler (102) with a locator located relative to a workpiece at a working position of the tool, the method comprising:
moving, a robotic arm (104) linked to the tool engagement coupler (102), in multiple axes relative to the workpiece to position the tool engagement coupler (102) at the working position via the locator;
operating the robotic arm in one or more impedance modes each of which is configured to give rise to a different stiffness in one or more of the axes of motion of the tool engagement coupler (102).

13. A method according to claim 12, further comprising selecting the impedance mode based upon at least one of the tasks a system is required to undertake and the distance the tool engagement coupler (102) is from the work position.

14. A method according to any one of claims 12 to 13, wherein a first impedance mode of the or each predetermined impedance modes comprises a stiff mode in which the robotic arm is moveable in one or more axes of motion.

15. A method according to any one of claims 12 to 14, wherein a second impedance mode of the or each predetermined impedance modes comprises a compliant mode in which the robotic arm is moveable in multiple axes of motion.
